# EUROPÄISCHE PATENTSCHRIFT

(11) **EP 1 036 098 B1**
(45) Veröffentlichungstag und Bekanntmachung des Hinweises auf die Patenterteilung: **24.07.2002**
(21) Anmeldenummer: 98963530.5
(22) Anmeldetag: 30.11.1998
(51) Int. Cl.: C08F 8/04, C08C 19/02

(54) **VERFAHREN ZUR SELEKTIVEN HYDRIERUNG VON ETHYLENISCH UNGESÄTTIGTEN DOPPELBINDUNGEN IN POLYMERISATEN**
METHOD FOR SELECTIVE HYDROGENATION OF ETHYLENE UNSATURATED DOUBLE BONDS IN POLYMERIZATES
PROCEDE D'HYDROGENATION SELECTIVE DE LIAISONS DOUBLES ETHYLENIQUEMENT INSATUREES DANS DES POLYMERISATS

(30) Priorität: 01.12.1997 DE 19753302
(43) Veröffentlichungstag der Anmeldung: 20.09.2000
(73) Patentinhaber: BASF AKTIENGESELLSCHAFT, 67056 Ludwigshafen (DE)
(72) Erfinder: LEUBE, Hartmann, F., D-67061 Ludwigshafen (DE); SCHMIDT-THÜMMES, Jürgen, D-67141 Neuhofen (DE); ZELLER, Edgar, D-68163 Mannheim (DE); MAAS, Heiko, D-67105 Schifferstadt (DE)
(74) Vertreter: Kinzebach, Werner, Dr.
(86) Internationale Anmeldenummer: EP9807715
(87) Internationale Veröffentlichungsnummer: WO9928357

(56) Entgegenhaltungen:
- EP-A- 0 061 337
- EP-A- 0 240 697
- WO-A-92/17512
- GB-A- 2 070 023
- US-A- 3 898 208
- US-A- 3 993 855
- US-A- 4 452 950
- US-A- 5 208 296
- US-A- 5 258 467
- N. K. SINGHA: "A NEW METHOD TO HYDROGENATE NITRILE RUBBER IN THE LATEX FORM" RUBBER CHEMISTRY AND TECHNOLOGY, Bd. 68, Nr. 2, Mai 1995, Seiten 281-286, XP000517239 OHIO, US

## Beschreibung

Die vorliegende Erfindung betrifft ein Verfahren zur selektiven Hydrierung von ethylenisch ungesättigten Doppelbindungen in Polymerisaten durch Umsetzung der Polymerisate mit Wasserstoff in Gegenwart wenigstens eines Hydrierkatalysators, ausgewählt unter Salzen und Komplexverbindungen des Rutheniums.

Die Hydrierung ethylenisch ungesättigter Doppelbindungen stellt ein wichtiges verfahren zur Derivatisierung von Polymerisaten, die ethylenisch ungesättigte Doppelbindungen enthalten, dar. Eine Reihe derartiger Polymerisate werden in großtechnischem Maßstab hergestellt. Hier seien beispielhaft Polymerisate auf der Basis von Butadien und/oder Isopren genannt. Die in diesen Polymerisaten enthaltenen ethylenisch ungesättigten Doppelbindungen sind Ausgangspunkte für Alterungsprozesse, wie sie unter Einwirkung von Licht, Sauerstoff und/oder Temperatur auftreten können. Derartige Alterungsprozesse, haben oftmals, abhängig vom Grad der Belastung, eine dramatische Verschlechterung der mechanischen Eigenschaften der Polymerisate bzw. der aus den Polymerisaten hergestellten Erzeugnisse sowie auffällige und störende Verfärbungen zu Folge. Durch Hydrierung der Doppelbindungen sollten sich derartige Schwachstellen entfernen lassen. Ferner ermöglicht die Hydrierung prinzipiell die Bereitstellung von Polymerklassen, die neu oder auf anderem Wege nur sehr viel aufwendiger herstellbar sind.

Bei der Entwicklung von Hydrierverfahren für Polymerisate ist grundsätzlich zu beachten, dass die zu hydrierenden Polymerisate neben den ethylenisch ungesättigten Doppelbindungen auch andere gegenüber der Hydrierung reaktive Funktionalitäten aufweisen können. Das Hydrierverfahren sollte sich daher im Regelfall durch eine hohe Selektivität hinsichtlich der zu hydrierenden Doppelbindungen auszeichnen. Ferner birgt die Hydrierung grundsätzlich die Gefahr, dass auf dem Polymer reaktive Zwischenstufen erzeugt werden, die mit noch nicht abreagierten Doppelbindungen unter Vernetzung reagieren können.

Verfahren zur Hydrierung von Polymerisaten, die ethylenisch ungesättigte Doppelbindungen aufweisen, sind grundsätzlich bekannt. Eine Übersicht Über derartige Verfahren geben N. T. McManus et al. (J. Macromol. Sci., Rev. Macromol. Chem. Phys. (C 35(2), 1995, 239-285). Allen beschriebenen Verfahren ist gemeinsam, dass die Umsetzung in einem organischen Medium durchgeführt wird. Hierzu zählt die homogene Reaktion des gelösten Polymers in Gegenwart eines homogenen gelösten Katalysators in einem organischen Lösungsmittel sowie heterogene Reaktionen von Polymeren, die in einem organischen Lösungsmittel suspendiert sind in Gegenwart homogen gelöster Katalysatoren, sowie die Hydrierung von Polymerlösungen und/oder Polymerschmelzen in Gegenwart heterogener Katalysatoren. In der Regel wird bei der Hydrierung jedoch Gelbildung beobachtet, was auf Vernetzungsreaktionen hinweist.

Aus der EP-A 588097 ist die Hydrierung von Polymerisaten auf der Basis von Butadien/Acrylnitril bekannt. Bei diesen Verfahren werden die Polymerisate als wässrige Dispersionen in wenigstens der fünffachen Menge, bezogen auf die Dispersion , eines organischen Lösungsmittels in Gegenwart von Rutheniumkatalysatoren umgesetzt. Durch Zugabe spezieller Additive wird die Bildung von vernetzten Polymeren weitgehend unterdrückt. Nachteilig an diesem Verfahren ist die Verwendung der großen Lösungsmittelmengen.

Die US-A-3,898,208 offenbart ein Verfahren zur Hydrierung eines Polymers mit ethylenisch ungesättigten Doppelbindungen in einem organischen Lösungsmittel als Quellungsmittel in Gegenwart eines Rhodium-Katalysators.

N. K. Singha et al. beschreiben in Rubber Chemistry and Technology, 68, 281-286 (1995) ein Verfahren zur Hydrierung von wässrigem NBR-Latex in Gegenwart eines Rhodium-Katalysators mit sulfonierten Triphenylphosphin-Liganden.

Die WO 92/17512 beschreibt einen Blend aus "Gummi"-Latex, der als eine Komponente einen hydrierten "Gummi"-Latex umfasst. Der hydrierte Latex wird durch Umsetzung eine Polymers mit ethylenisch ungesättigten Doppelbindungen, vorzugsweise eines Acrylnitril-Butadien-Copolymers mit Hydrazin in Gegenwart eines Oxidationsmittels hergestellt. Aus der US-A-4,452,950 ist ebenfalls ein Verfahren zur Hydrierung von Kohlenstoff-Kohlenstoff-Doppelbindungen in ungesättigten Polymeren bekannt. Die Hydrierung erfolgt mit Hydrazin in Gegenwart eines Oxidationsmittels.

Die GB-A-2 070 023 beschreibt die Hydrierung von Acrylnitril-Butadien-Styrol-Latices. Die Hydrierung erfolgt in Gegenwart eines Homogen-Katalysators unter Verwendung größerer Mengen an organischem Lösungsmittel.

Grundsätzlich besteht ein großes Interesse an der Übertragung der katalytischen Hydrierung von Polymerisaten, die ethylenisch ungesättigte Doppelbindungen enthalten, auf wässrige Reaktionssysteme. So sind einige großtechnisch bedeutende Polymerisate des Butadiens kommerziell als wässrige Polymerisatdispersionen verfügbar. Ferner stellt die Verwendung von Lösungsmitteln bei der Produktion einen nicht unwesentlichen Kostenfaktor dar. Die Vermeidung von Lösungsmitteln erscheint aus arbeitshygienischen Gründen und Umweltschutzaspekten wünschenswert.

Der vorliegenden Erfindung liegt die Aufgabe zugrunde, ein Verfahren zur selektiven Hydrierung von ethylenisch ungesättigten Doppelbindungen in Polymerisaten bereitzustellen, das einerseits ohne die Verwendung größerer Lösungsmittelmengen auskommt und andererseits eine hohe Selektivität der Hydrierungsreaktion der ethylenischen Doppelbindung gegenüber der Hydrierung anderer Funktionalitäten oder gegenüber Vernetzungsreaktionen gewährleistet.

Diese Aufgabe konnte überraschenderweise durch ein Verfahren gelöst werden, bei dem man die Polymerisate in Gegenwart von Ruthenium-enthaltenden Verbindungen oder Salzen als Hydrierkatalysatoren in einer wässrigen Dispersion der Polymerisate hydriert, die kein oder nur geringe Mengen organischer Lösungsmittel enthält.

Gegenstand der vorliegenden Erfindung ist daher ein Verfahren zur selektiven Hydrierung von ethylenisch ungesättigten Doppelbindungen in Polymerisaten P durch Umsetzung der Polymerisate P mit Wasserstoff in Gegenwart wenigstens eines Hydrierkatalysators, ausgewählt unter Salzen und Komplexverbindungen des Rutheniums, dadurch gekennzeichnet, dass man die Umsetzung bei Temperaturen im Bereich von > 100 bis 250 °C und Wasserstoffpartialdrücken im Bereich von 50 bis 600 bar in einer wässrigen Dispersion der Polymerisate P durchführt, die nicht mehr als 20 Vol.-% eines organischen Lösungsmittels enthält.

Die Hydrierung von Polymerisaten in wässriger Dispersion wurde bislang für nicht möglich erachtet. Es wurde angenommen, dass die Polymerisate für eine erfolgreiche Hydrierung in gelöstem oder geschmolzenem, zumindest aber in gequollenem Zustand vorliegen müssen, damit die katalytisch aktiven Spezies an die reaktiven Stellen, d. h. die ethylenisch ungesättigten Doppelbindungen im Polymer, gelangen können. In organischen Reaktionsmedien werden hydrophobe Polymere naturgemäß gelöst oder zumindest gequollen vorliegen, nicht aber hingegen in Wasser oder wässrigen Reaktionssystemen. Aus diesem Grunde wurde die Hydrierung von hydrophoben Polymerisaten, wie bereits erwähnt , bisher stets in einem organischen Medium oder in geschmolzenem Zustand durchgeführt.

Diese Auffassung wird unter anderem von B. Cornils, Angew. Chem. 107, 1995, 1709-1711 bestätigt. Dort wird ausgeführt, dass katalytische Reaktionen in Zwei-Phasen-Systemen, worin das Substrat die hydrophobe Phase bildet und der Katalysator sich in der wässrigen Phase befindet, an ihre Grenzen stoßen, wenn die Edukte, hier die Polymerisate, zu wenig wasserlöslich sind und damit der Transfer von organischem Substrat in die wässrige Phase oder an die Grenzfläche behindert wird. Die erfindungsgemäß zur Anwendung kommenden Ruthenium- enthaltenden Katalysatorsysteme hingegen scheinen in der Lage zu sein, unter den Reaktionsbedingungen wenigstens teilweise in die Grenzfläche Polymerphase/Wasser einzudringen oder sie zu überschreiten.

Im erfindungsgemäßen Verfahren können als Hydrierkatalysatoren bzw. als Katalysatorvorstufen alle Salze und/oder Komplexverbindungen des Rutheniums eingesetzt werden, die unter den jeweiligen Reaktionsbedingungen, d. h. Wasserstoffpartialdruck, Reaktionstemperatur, pH-Wert der Reaktionsmischung sowie gegebenenfalls anwesende Coliganden (bzw. als Coliganden wirkende organische oder anorganische Verbindungen) zur Bildung niedermolekularer, hydrieraktiver Spezies geeignet sind.

Zu diesem Zweck geeignete Salze des Rutheniums sind beispielsweise Hydride, Oxyde, Sulfide, Nitrate, Sulfate, Halogenide, z. B. Chloride, Carboxylate, z. B. Acetate, Propionate, Hexanoate oder Benzoate, di Salze mit Sulfonsäuren sowie gemischte Salze, d. h. Salze mit verschiedenen Anionen, z. B. die Oxidchloride. Weiterhin eignen sich Salze von komplexen Ionen des Rutheniums, beispielsweise die Salze der Rutheniumsauerstoffsäuren, die Salze von Halogenoruthenaten, insbesondere die Chlororuthenate, die Ammin- und Aquokomplexe der Rutheniumhalogenide, insbesondere der Chloride, sowie die Salze von Nitroruthenaten. Beispiele für die vorgenannten Salze und komplexen Salze sind: Ruthenium(III)chlorid, Ruthenium(III)nitrosylchlorid, Ammoniumpentachloroaquoruthenat(III), Hexamminruthenium(II)- und -ruthenium(III)chlorid, Dichlorobis (2,2'-dipyridyl)ruthenium(II), Tris(2,2'-dipyridyl)ruthenium(II)chlorid, Pentamminchlororuthenium(III)chlorid, Kaliumpentachloronitrosylruthenium(II), Ruthenium(IV)oxid, Tetraacetatochlorodiruthenium(II,III), Hexakisacetatotriaquo-µ-oxotriruthenium(III)acetat. Ebenfalls geeignet sind neutrale Komplexe des Rutheniums. Hierbei sei angemerkt, dass die Übergänge zwischen Salzen des Rutheniums sowie salzartigen und neutralen Komplexen fließend sind und die vorliegende Einteilung nur ordnenden Charakter hat. Beispiele für neutrale Komplexe umfassen die 2,4-Pentandionate des Rutheniums wie Ruthenium(III)tris-2,4-pentandionat, die Carbonylkomplexe des Rutheniums wie Dodecacarbonyltriruthenium.

Weiterhin sind Komplexe des Rutheniums der allgemeinen Formel

Ru X¹X² (CO)ₖ (L¹)₁ (L²)₂

mit phosphororganischen Verbindungen geeignet, worin
- X¹und X²: unabhängig voneinander für Wasserstoff, Halogen, vorzugsweise Chlorid, das Anion einer Carbonsäure, z. B. Acetat, Benzoat oder Hexanoat oder einer Sulfonsäure, z. B. Phenylsulfonat, Acetylacetonat, Phenyl, das gegebenenfalls substituiert ist, stehen,
- k und l: unabhängig voneinander für 0, 1 oder 2 stehen, mit der Massgabe, dass k + l = 1 oder 2 ist,
- L¹: ausgewählt ist unter Carbonyl, Pyridin, Benzonitril, Dibenzophosphol, Cycloolefinen und einem Liganden der allgemeinen Formel PR₃, worin
R für Alkyl, Alkyloxy, Cycloalkyl, Cycloalkyloxy , Aryl, vorzugsweise Phenyl, das gegebenenfalls auch substituiert sein kann, und Aryloxy, und
- L²: für PR₃ und (L²)₂ auch für R₂P-A-PR₂ stehen kann, worin R die oben genannte Bedeutung aufweist und A für Alkylen oder Arylen steht.

In diesem Zusammenhang steht Alkyl sowohl für lineares, als auch verzweigtes Alkyl, das vorzugsweise 1 bis 12 Kohlenstoffatome und insbesondere 1 bis 4 Kohlenstoffatome aufweist, z. B. Methyl, Ethyl, n-Propyl, Isopropyl, n-Butyl, 2-Butyl, Isobutyl, tert.-Butyl, n-Hexyl, 2-Ethylhexyl und n-Decyl. Alkyloxy steht in der Regel für C₁-C₁₂-Alkyloxy und vorzugsweise C₁-C₄-Alkyloxy, z. B. Methoxy, Ethoxy, n-Propoxy, Isopropoxy, n-Butoxy, 2-Butyloxy, tert.-Butoxy, n-Hexyloxy, 2-Ethylhexyloxy. Der Alkylrest kann ferner Hydroxy- oder Aminofunktionen aufweisen oder durch ein oder mehrere, nicht benachbarte Sauerstoffatome oder Iminogruppen unterbrochen sein. Beispiele für derartige Reste sind 2-Hydroxyethyl, Hydroxypropyl, 2-Aminoethyl, 5-Hydroxy-3-oxopentyl. Aryl steht beispielsweise für Phenyl oder Naphthyl, die einen oder mehrere Substituenten aufweisen können. Geeignete Substituenten sind Halogen, z. B. Chlorid, Alkyl, insbesondere C₁-C₄-Alkyl, Alkyloxy, insbesondere C₁-C₄-Alkyloxy und Hydroxy, das gegebenenfalls auch ethoxyliert sein kann. Bevorzugtes Aryl ist Phenyl, o-, m- oder p-Tolyl, p-Chlorphenyl, p-tert.-Butylphenyl und p-Hydroxyphenyl, das auch ethoxyliert sein kann (EO-Grad 1 bis 50). Alkylen steht vorzugsweise für 1,2-Ethylen oder 1,2- bzw. 1,3-Propylen, die gegebenenfalls substituiert sind und/oder Teil eines Carbocyclus oder eines Heterocyclus sind. Arylen umfasst insbesondere o-Phenylen, o,o-Diphenylen und (o,o-Diphenylen)methan.

Beispiele für Liganden PR₃ sind Triphenylphosphin, Triisopropylphosphin, Tris-n-butylphosphin, Tris-n-octylphosphin, Tricyclohexylphosphin, Trisanisylphosphan, Tris(p-tolyl)phosphin, Triethylphosphit und Tri-n-butylphosphit.

Beispiele für geeignete Phosphinkomplexe des Rutheniums sind: Carbonylchlorohydridobis(tricyclohexylphosphin)ruthenium(II), Carbonylchlorohydridobis(triisopropylphosphin)ruthenium(II), Carbonylchlorohydridobis(triphenylphosphin)ruthenium(II), Carbonylchlorostyrylbis(tricyclohexylphosphin)ruthenium(II),Carbonylchlorostyrylbis(triisopropylphosphin)ruthenium(II), Carbonylchlorobenzoatobis(triphenylphosphin)ruthenium(II), Dichlorotris(triphenylphosphin)ruthenium(II), Bis(triphenylphosphin)rutheniumdicarbonylchlorid, Acetatohydrido-tris(triphenylphosphin)ruthenium(II).

Die Hydrieraktivität der oben genannten Ruthenium salze sowie der Komplexverbindungen kann grundsätzlich durch zugabe von phosphorenthaltenden Verbindungen, die zur Ausbildung wenigstens einer koordinativen Bindung zwischen dem Phosphoratom und dem Übergangsmetall in der Lage sind, gesteigert werden. Beispiele für geeignete phosphorenthaltende Verbindungen sind die oben genannten Verbindungen der allgemeinen Formel PR₃ und R₂P-A-PR₂ sowie ferner Trifluorphosphan, Dibenzophosphol etc. Derartige Verbindungen können auch dahingehend modifiziert sein, daß sie noch weitere zur Koordination mit dem Metallatom geeignete Atome oder Atomgruppen, wie Amino- oder Iminogruppen, z. B. Oxazolin und Imidazolin-Gruppen, aufweisen. Die Wirkungsweise derartiger phosphorenthaltender Verbindungen ist vermutlich so zu erklären, dass sie die Bildung hydrieraktiver Spezies aus dem jeweils eingesetzten Ruthenium precursor unterstützen. Bevorzugte phosphorenthaltende Verbindungen sind die oben genannten Verbindungen der allgemeinen Formel PR₃ oder R₂P-A-PR₂.

Als Hydrierkatalysatoren werd Salze und/oder Komplexverbindungen des Rutheniums eingesetzt. Diese werden vorzugsweise mit den oben genannten phosphorenthaltenden Verbindungen, insbesondere mit Verbindungen der allgemeinen Formel PR₃ und/oder R₂P-A-PR₂ eingesetzt. In diesem Fall werden die phosphorhaltigen Verbindungen insbesondere ausgewählt unter Triisopropylphosphin, Tri-n-butylphosphin, Tris-n-octylphosphin, Tricyclohexylphosphin, Triphenylphosphin, Trisanisyiphosphin und Tris(p-tolyl)phosphin.

Bei einer speziellen Ausführungsform des vorliegenden Verfahrens wird ein Katalysatorsystem eingesetzt, das wenigstens eines der oben genannten Pentandionate des Rutheniums, insbesondere Ruthenium(III)tris-2,4-pentandionat und wenigstens eine Verbindung der allgemeinen Formel PR₃ und/oder R₂P-A-PR₂, insbesondere Triisopropylphosphin, Tri-n-butylphosphin, Tricyclohexylphosphin und/oder Triphenylphosphin umfasst.

Das molare Verhältnis von phosphorenthaltender Verbindung zu Metallatom liegt in der Regel im Bereich von 1:2 bis 40:1, vorzugsweise 1:1 bis 20:1 und im Falle einer Kombination eines Rutheniumpentandionats mit einer phosphorenthaltenden Verbindung im Bereich von 1:2 bis 20:1, vorzugsweise 2:1 bis 10:1. Vorzugsweise werden derartige Katalysatorsysteme vor ihrem Einsatz in der Hydrierungsreaktion durch Zusammenmischen der Komponenten, gegebenenfalls unter Erwärmen, z. B. auf 50 bis 150 °C, in einem geeigneten Lösungsmittel und gegebenenfalls unter Wasserstoffdruck, z. B. 1 bis 20 bar, hergestellt. Als Lösungsmittel kommen z. B. aromatische Kohlenwasserstoffe wie Benzol, Toluol, Xylole, Chlorbenzol, Anisol, Cumol, Ether wie Diethylether, Tetrahydrofuran, Dioxan, Amide wie Dimethylformamid, N-Methylpyrrolidon, Dimethylsulfoxid, Alkohole wie Methanol, Ethanol, n-Propanol, Isopropanol, n-Butanol, tert.-Butanol oder Ketone, wie Aceton oder Methylethylketon, in Frage.

Als Substrate für das erfindungsgemäße Hydrierverfahren kommen prinzipiell alle wässrigen Dispersionen von Polymerisaten mit ethylenisch ungesättigten Doppelbindungen in Betracht. Hierzu zählen sowohl Dispersionen, die durch radikalische Polymerisation von wässrigen Monomeremulsionen hergestellt werden (Primärdispersionen), als auch solche, deren Polymerisate auf anderem Wege hergestellt werden und anschließend in eine wässrige Dispersion überführt werden (Sekundärdispersionen). Der Begriff Polymerisatdispersion umfasst grundsätzlich auch Dispersionen von Mikrokapseln.

Geeignete Polymerisate P, die ethylenisch ungesättigte Doppelbindungen enthalten sind Homo- oder Copolymerisate konjugierter Diene, die in der Regel 10 bis 100 Gew.-% wenigstens eines konjugierten Diens als Monomer (a) enthalten. Geeignete Dien-Monomere (a) umfassen beispielsweise Butadien, Isopren, Chloropren, 1-Methylbutadien, 2,3-Dimethylbutadien, 2-(Tri-C₁-C₄-alkyl)silylbutadien, wie 2-Triethylsilyl-1,3-butadien, und deren Mischungen. Bevorzugte Monomere (a) sind Butadien und Isopren, insbesondere Butadien.

In einer bevorzugten Ausführungsform wird das erfindungsgemäße Verfahren für die Hydrierung von Polymerisaten P eingesetzt, die aus wenigstens einem konjugierten Dien als Monomer (a) und wenigstens einem weiteren, mit dem Dien copolymerisierbaren Monomer (b) aufgebaut sind. Derartige Copolymere sind in der Regel aus 10 bis 99 Gew.-%, insbesondere 20 bis 95 Gew.-% Monomeren (a) und 1 bis 90 Gew.-%, vorzugsweise 5 bis 80 Gew.-% Monomeren (b) aufgebaut.

Geeignete Monomere (b) sind beispielsweise Olefine, z. B. Ethylen, Propylen, vinylaromatische Monomere, z. B. Styrol, α-Methylstyrol, o-Chlorstyrol oder Vinyltoluole, Vinylester aliphatischer oder verzweigter C₁-C₁₈-Monocarbonsäuren wie Vinylacetat, Vinylpropionat, Vinylbutyrat, vinylvalerat, Vinylhexanoat, Vinyl-2-ethylhexanoat, Vinyldecanoat, Vinyllaurat und Vinylstearat, Ester aus vorzugsweise 3 bis 6 C-Atome aufweisenden ethylenischen ungesättigten Mono- und Dicarbonsäuren, wie insbesondere Acrylsäure, Methacrylsäure, Maleinsäure, Fumarsäure und Itaconsäure, mit im allgemeinen 1 bis 12, vorzugsweise 1 bis 8 und insbesondere 1 bis 4 C-Atomen aufweisenden Alkanolen wie z. B. Methanol, Ethanol, n-Propanol, Isopropanol, 1-Butanol, 2-Butanol, Isobutanol, tert.-Butanol, n-Hexanol, 2-Ethylhexanol, oder C₅-C₁₀-Cycloalkanolen wie Cyclopentanol oder Cyclohexanol und hierunter besonders bevorzugt die Ester der Acrylsäure und/oder der Methacrylsäure, z. B. Methylmethacrylat, n-Butylmethacrylat, tert.-Butylmethacrylat, n-Butylacrylat, 2-Ethylhexylacrylat und tert.-Butylacrylat. Weiterhin kommen als Monomere (b) ethylenisch ungesättigte Nitrile wie Acrylnitril oder Methacrylnitril in Betracht. Bevorzugte Monomere (b) sind Styrol, α-Methylstyrol und Acrylnitril.

Neben den Monomeren (a) und (b) können die zu hydrierenden Polymerisate P auch modifizierende Monomere (c) in einpolymerisierter Form enthalten. Die Polymerisate P können in der Regel bis zu 20 Gew.-%, bezogen auf das Gesamtgewicht der Monomere (a), (b) und (c), derartige modifizierende Monomere (c) einpolymerisiert enthalten. Zu den modifizierenden Monomeren (c) zählen Monomere (c'), die eine erhöhte Wasserlöslichkeit (z. B. > 60 g/l bei 25 °C und 1 bar) aufweisen. Die Monomere (c') umfassen z. B. die vorgenannten ethylenisch ungesättigten Carbonsäuren, insbesondere Acrylsäure, Methacrylsäure, Maleinsäure, Itaconsäure, die Amide der vorgenannten ethylenisch ungesättigten Carbonsäuren, z. B. Acrylamid und Methacrylamid, die N-Alkylolamide der vorgenannten ethylenisch ungesättigten Carbonsäuren wie N-Methylolacrylamid und N-Methylolmethacrylamid, die Hydroxyalkylester der vorgenannten ethylenisch ungesättigten Carbonsäuren, z. B. 2-Hydroxyethylacrylat und -methacrylat, ethylenisch ungesättigte Sulfonsäuren bzw. deren Alkalimetallsalze, z. B. Vinylsulfonsäure, Allylsulfonsäure, Methallylsulfonsäure, Acrylamido-2-methylpropansulfonsäure, ferner N-Vinyllactame, z. B. N-Vinylpyrrolidon oder N-Vinylcaprolactam. Derartige Monomere (c') werden in der Regel in untergeordnetem Maße, d. h < 20 Gew.-%, bezogen auf die Gesamtmenge der zu polymerisierenden Monomere (a), (b) und (c), vorzugsweise ≤ 10 Gew.-%, beispielsweise in Mengen von bis zu 0,1 bis 10 Gew.-% und speziell 0,5 bis 8 Gew.-%, eingesetzt.

Weiterhin umfassen die Monomere (c) auch Monomere (c''), die wenigstens zwei nicht-konjugierte, ethylenisch ungesättigte Bindungen aufweisen, z. B. die Diester zweiwertiger Alkohole mit ethylenisch ungesättigten Monocarbonsäuren. Beispiele hierfür sind Alkylenglykoldiacrylate und Dimethacrylate wie Ethylenglykoldi(meth)acrylat, 1,3-Butylenglykoldi(meth)acrylat, 1,4-Butylenglykoldi(meth)acrylat, Propylenglykoldi(meth)acrylat, weiterhin Divinylbenzol, Vinylmethacrylat, Vinylacrylat, Allylmethacrylat, Allylacrylat, Diallylmaleat, Diallylfumarat, Diallylphthalat, Methylenbisacrylamid, Cyclopentadienylacrylat und -methacrylat, Tricyclodecenylacrylat und -methacrylat, N,N'-Divinylimidazolin-2-on oder Triallylcyanurat. Derartige Monomere werden, sofern erwünscht in Mengen von 0,01 bis 10 Gew.-%, bezogen auf die Gesamtmenge der Monomere (a) + (b) + (c) eingesetzt

Die Vorteile des erfindungsgemäßen Verfahrens kommen insbesondere bei der Hydrierung von Polymerisatdispersionen zum Tragen, die Monomere (b) und/oder (c) einpolymerisiert enthalten, die funktionelle Gruppen aufweisen, welche grundsätzlich einer Hydrierung zugänglich sind. Hierzu zählen insbesondere Monomere mit Carbonylgruppen, Nitrilgruppen und/oder Arylgruppen, z. B. Phenylgruppen, die gegebenenfalls auch substituiert sein können.

Bevorzugte Ausführungsformen des erfindungsgemäßen Verfahrens betreffen die Hydrierung von Polymerisatdispersionen, deren Polymerisate P im Wesentlichen aus Butadien und/oder Isopren, insbesondere Butadien als alleinigem Monomer (a), und aus Styrol, Acrylnitril, Methacrylnitril, Isobuten und/oder (Meth)acrylsäurealkylestern als Monomeren (b) aufgebaut sind.

Bevorzugte Monomerkombinationen (a)/(b) sind Butadien und/oder Isopren mit Styrol und/oder α-Methylstyrol, Butadien mit Acrylnitril und/oder Methacrylnitril, Butadien und Isopren mit Acrylnitril und/oder Methacrylnitril; Butadien mit Acrylnitril und Styrol; Butadien mit Isobuten; Butadien mit (Meth)acrylsäurealkylestern.

Eine spezielle Ausführungsform der vorliegenden Erfindung betrifft die Hydrierung von Polymerisatdispersionen, deren Polymerisate P im Wesentlichen aufgebaut sind aus
- 20 bis 95 Gew.-% Monomeren (a), ausgewählt unter Butadien und Isopren, und
- 5 bis 80 Gew.-% Monomeren (b), ausgewählt unter Styrol, α-Methylstyrol und Acrylnitril,
wobei die Anteile der Monomere (a) und (b) sich zu 100 Gew.-% addieren. Selbstverständlich können derartige Polymerisate modifizierende Monomere (c) in den oben bezeichneten Mengen einpolymerisiert enthalten, und zwar vorzugsweise in Mengen bis zu 10 Gew.-%, bezogen auf die Gesamtmenge der Monomere (a), (b) und (c). Bevorzugte Monomere (c) sind Acrylsäure, Methacrylsäure, Itaconsäure, Acrylamid, Methacrylamid, N-Methylolacrylamid und/oder N-Methylolmethacrylamid.

Die Herstellung derartiger Polymerisate P ist dem Fachmann bekannt und kann grundsätzlich durch anionische, radikalische oder Ziegler-Natta-Polymerisation in Lösung, in Substanz, in Suspension oder in Emulsion durchgeführt werden. Je nach Reaktionstyp liegen die konjugierten Diene 1,4-polymerisiert und/oder 1,2-polymerisiert vor. Für das erfindungsgemäße Hydrierverfahren werden vorzugsweise Polymerisate eingesetzt, die durch radikalische, wässrige Emulsionspolymerisation der vorgenannten Monomere (a) und gegebenenfalls (b) und/oder (c) (einschließlich Mini- und Mikroemulsionspolymerisation) hergestellt wurden. Diese Verfahren sind dem Fachmann hinreichend bekannt und in der Literatur ausführlich beschrieben, beispielsweise in Ullmanns Encyclopedia of Industrial Chemistry, 5th ed., Vol. A21., S. 373-393. In der Regel werden solche Polymerisate in Gegenwart von Radikalinitiatoren und gegebenenfalls oberflächenaktiven Substanzen wie Emulgatoren und Schutzkolloiden (s. beispielsweise Houben-Weyl, Methoden der organischen Chemie, Bd. XIV/1, Makromolekulare Stoffe, Georg Thieme-Verlag, Stuttgart 1961, S. 192-208) hergestellt.

Geeignete radikalische Polymerisationsinitiatoren umfassen organische Peroxide wie tert.-Butylhydroperoxid, Benzoylhydroperoxid, Diisopropylbenzoylperoxid, anorganische Peroxide, wie Wasserstoffperoxid, Salze der Peroxomono- und/oder Peroxodischwefelsäure, insbesondere die Ammonium- und/oder Alkalimetallperoxidisulfate (Persulfate), sowie Azoverbindungen, wobei die Persulfate besonders bevorzugt sind. Bevorzugt sind auch kombinierte Systeme, die aus wenigstens einem organischen Reduktionsmittel und wenigstens einem Peroxid und/oder Hydroperoxid zusammengesetzt sind, z. B. tert.-Butylhydroperoxid und das Natriumsalz der Hydroxymethansulfinsäure oder Wasserstoffperoxid und Ascorbinsäure (als elektrolytfreies Redoxinitiatorsystem), und kombinierte Systeme, die darüber hinaus eine geringe Menge einer im Polymerisationsmedium löslichen Metallverbindung, deren metallische Komponente in mehreren Wertigkeitsstufen auftreten kann, enthalten, z. B. Ascorbinsäure/Eisen(II)sulfat/Wasserstoffperoxid, wobei anstelle von Ascorbinsäure auch häufig das Natriumsalz der Hydroxymethansulfinsäure, Natriumsulfit, Natriumhydrogensulfit oder Natriumbisulfit und anstelle von Wasserstoffperoxid auch tert. Butylhydroperoxid, Alkalimetallperoxidsulfate und/oder Ammoniumperoxidisulfat eingesetzt werden können. Anstelle eines wasserlöslichen Eisen(II)-Salzes kann auch eine Kombination aus wasserlöslichen Fe/V-Salzen eingesetzt werden.

Die genannten Polymerisationsinitiatoren werden in üblichen Mengen eingesetzt, z. B. in Mengen von 0,01 bis 5, vorzugsweise 0,1 bis 2,0 Gew.-%, bezogen auf die zu polymerisierenden Monomere.

Gegebenenfalls kann die Monomermischung in Gegenwart von üblichen Polymerisationsreglern, wie Mercaptanen, z. B. tert.-Dodecylmercaptan, polymerisiert werden. Diese werden dann in einer Menge von 0,01 bis 5 Gew.-%, bezogen auf die Gesamtmenge der Mischung, verwendet.

Hinsichtlich der verwendbaren Emulgatoren bestehen keine besonderen Einschränkungen. Bevorzugt sind neutrale Emulgatoren wie ethoxylierte Mono-, Di- und Tri-Alkylphenole (EO-Grad: 3 bis 50, Alkylrest: C₄ bis C₉) oder ethoxylierte Fettalkohole (EO-Grad: 3 bis 50, Alkylrest C₈ bis C₃₆) und/oder anionische Emulgatoren wie die Alkali- und Ammoniumsalze von Fettsäuren (Alkylrest: C₁₂ bis C₂₄), Alkylsulfaten (Alkylrest: C₈ bis C₂₂), von Schwefelsäurehalbestern ethoxylierter Alkanole (EO-Grad: 4 bis 30, Alkylrest: C₈ bis C₂₂) und ethoxylierter Alkylphenole (EO-Grad: 3 bis 50, Alkylrest: C₄ bis C₁₀), von Alkylsulfonsäuren (Alkylrest: C₈ bis C₂₂) und von Alkylarylsulfonsäuren (Alkylrest: C₄ bis C₁₈). Als anionische Emulgatoren kommen weiterhin Alkali- oder Ammoniumsalze von Mono- oder Di-C₄-C₂₄-alkylderivaten des Bis(phenylsulfonsäure)ethers in Frage, z. B. technische Gemische, die 50 bis 80 % des monoalkylierten Produkts enthalten. Derartige Emulgatoren sind aus der US-A 4 269 749 bekannt, die technischen Gemische sind beispielsweise unter der Bezeichnung Dowfax®2A1 (Dow Chemical) im Handel erhältlich.

Besonders bevorzugt sind die Alkalimetall- und/oder Ammoniumsalze, insbesondere die Natriumsalze von Alkylarylsulfonsäuren, Alkylsulfonsäuren, (z. B. sulfoniertes C₁₂-C₁₈-Paraffin; als Emulgator K30 der Bayer AG im Handel), Alkylsulfaten (z. B. Natriumlaurylsulfonat als Texapon®K12 von der Firma Henkel im Handel) und von den Schwefelsäurehalbestern ethoxilierter Alkanole (z. B. sulfatiertes Ethoxilat des Laurylalkohols mit 2 bis 3 EO-Einheiten; als Texapon®NSO der Henkel KGaA im Handel). Ebenfalls geeignete Emulgatoren sind die Natrium- oder Kaliumsalze von Fettsäuren (C₁₂-C₂₃-Alkylreste), z. B. Kaliumoleat. weitere geeignete Emulgatoren finden sich in Houben-Weyl, Methoden der organischen Chemie, Band XIV/l, Makromolekulare Stoffe, Georg-Thieme Verlag, Stuttgart, 1961, Seiten 192 bis 208. Anstelle von oder im Gemisch mit Emulgatoren können aber auch konventionelle Schutzkolloide wie Polyvinylalkohol, Polyvinylpyrrolidon oder amphiphile Blockpolymere mit kurzen hydrophoben Blöcken zur Co-Stabilisierung eingesetzt werden. In der Regel wird die verwendete Menge an Emulgatoren, bezogen auf die zu polymerisierenden Monomeren, 5 Gew.-% nicht überschreiten.

Die radikalische Polymerisationsreaktion kann in Gesamtansatzvorlage (Batch-verfahren) durchgeführt werden, vorzugsweise wird jedoch, insbesondere im technischen Maßstab, nach dem Zulaufverfahren gearbeitet. Hierbei wird die überwiegende Menge (in der Regel 50 bis 100 Gew.-%) der zu polymerisierenden Monomeren dem Polymerisationsgefäß gemäß dem Fortschreiten der Polymerisation der bereits im Polymerisationsgefäß befindlichen Monomeren zugesetzt. Das radikalische Initiatorsystem kann hierbei sowohl vollständig im Polymerisationsgefäß vorgelegt, als auch nach Maßgabe seines Verbrauchs im Verlauf der radikalischen wässrigen Emulsionspolymerisation kontinuierlich oder stufenweise der Polymerisationsreaktion zugeführt werden. Im einzelnen hängt dies in bekannter Weise sowohl von der chemischen Natur des Initiatorsystems als auch von der Polymerisationstemperatur ab. Vorzugsweise wird das Initiatorsystem nach Maßgabe des Verbrauchs der Polymerisationszone zugeführt.

Vorzugsweise wird die Polymerisationsreaktion in Gegenwart einer wässrigen Polymerisatdispersion als Polymersaat (Saat-Latex) durchgeführt. Derartige Verfahren sind dem Fachmann grundsätzlich bekannt und beispielsweise in der DE-A 42 13 967, DE-A 42 13 968, EP-A 567 811, EP-A 567 812 oder EP-A 567 819 beschrieben, auf die hiermit in vollem Umfang Bezug genommen wird. Grundsätzlich kann die Saat je nach gewünschter Eigenschaft vorgelegt oder während der Polymerisation kontinuierlich oder stufenweise zugegeben werden. Vorzugsweise erfolgt die Polymerisation mit vorgelegter Saat. Die Menge an Saatpolymer liegt vorzugsweise im Bereich von 0,05 bis 5 Gew.-%, vorzugsweise 0,1 bis 2 Gew.-% und insbesondere 0,2 bis 1 Gew.-%, bezogen auf die Monomere a) bis d). Vorzugsweise weisen die Polymerisatteilchen des verwendeten Saatlatex gewichtsmittlere Teilchendurchmesser im Bereich von 10 bis 100 nm, vorzugsweise 20 bis 60 nm und insbesondere etwa 30 nm auf. Vorzugsweise wird eine Polystyrolsaat verwendet.

Die Polymerisationsreaktion wird vorzugsweise unter Druck durchgeführt. Die Polymerisationsdauer kann in einem weiten Bereich variieren. Sie liegt im allgemeinen im Bereich von 1 bis 15 Stunden, vorzugsweise im Bereich von 3 bis 10 Stunden. Auch die Polymerisationstemperatur ist in einem weiten Bereich variabel. Sie beträgt, je nach verwendetem Initiator, etwa 0 bis 110 °C.

Die auf diese Weise hergestellten Polymerisatdispersionen weisen in der Regel Feststoffgehalte bis zu 75 Gew.-% auf. Von besonderer Bedeutung sind Polymerisatdispersionen mit Feststoffgehalten von 40 bis 70 Gew.-%. Für den Einsatz im erfindungsgemäßen Hydrierverfahren können die Dispersionen mit diesen Feststoffgehalten eingesetzt werden. Gegebenenfalls müssen die Dispersionen jedoch zuvor auf einen geeigneten Feststoffgehalt verdünnt werden. Bevorzugt liegt der Feststoffgehalt der im Verfahren eingesetzten Dispersion im Bereich von 10 bis 60 Gew.-%, insbesondere 20 bis 50 Gew.-%, bezogen auf das Gesamtgewicht der Dispersion.

Die in den Polymerisatdispersionen in der Regel noch enthaltenen oberflächenaktiven Substanzen sowie weitere Stoffe, die beispielsweise bei Emulsionspolymerisationen als übliche Polymerisationshilfsmittel verwendet werden, wirken sich im erfindungsgemäßen Hydrierverfahren nicht störend aus. Es empfiehlt sich jedoch die Polymerisatdispersionen vor der Hydrierung zuvor chemisch oder physikalisch zu desodorieren. Eine physikalische Desodorierung durch Abstreifen der Restmonomere mittels Wasserdampf ist beispielsweise aus der EP-A 584 458 bekannt. Die EP-A 327 006 wiederum empfiehlt die Anwendung konventioneller Destillationsverfahren. Die chemische Desodorierung erfolgt vorzugsweise durch eine sich an die Hauptpolymerisation anschließende Nachpolymerisation. Derartige Verfahren werden beispielsweise in der DE-A 383 4734, der EP-A 379 892, der EP-A 327 006, der DE-A 44 19 518, der DE-A 44 35 422 sowie der DE-A 44 35 423 beschrieben.

Die Durchführung der erfindungsgemäßen Hydrierung erfolgt in der Regel so, dass man einen der obengenannten Katalysatoren oder Katalysatorvorstufen sowie gegebenenfalls einen oder mehrere Coliganden, beispielsweise die obengenannten phosphorenthaltenden Verbindungen, gegebenenfalls gelöst in einem organischen Lösungsmittel, zu der Polymerisatdispersion gibt. Gegebenenfalls stellt man die Dispersion durch Verdünnen mit Wasser oder einer Wasser-Emulgator-Mischung oder mit einem mit Wasser mischbaren organischen Lösungsmittel auf einen geeigneten Feststoffgehalt ein.
Dann stellt man den gewünschten Wasserstoffdruck ein und erhitzt auf eine geeignete Reaktionstemperatur. Hierbei kann man z. B. so vorgehen, dass man zuerst nach Zugabe des Katalysators zu der Dispersion einen geringeren Wasserstoffüberdruck einstellt, dann den Reaktionsansatz auf die gewünschte Reaktionstemperatur erhitzt und dann den für die Reaktion erforderlichen Wasserstoffüberdruck einstellt. Es ist oftmals zweckmäßig, zuvor das Reaktionsgefäß mit einem inerten Gas, beispielsweise Stickstoff, zu spülen.

Geeignete Lösungsmittel zum Verdünnen umfassen insbesondere die obengenannten C₁-C₄-Alkanole, Ketone wie Aceton und Ethylmethylketon, cyclische Ether wie Tetrahydrofuran oder Dioxan oder Amide wie N,N-Dimethylformamid oder N-Methylpyrrolidon. Der Lösungsmittelgehalt der zu hydrierenden Polymerisatdispersion wird jedoch 20 Gew.-%, bezogen auf das Gesamtgewicht der Dispersion nicht überschreiten. Vorzugsweise wird die wässrige Polymerisatdispersion, sofern erforderlich ausschließlich mit Wasser oder einer Wasser-Emulgator-Mischung verdünnt.

Es erweist sich jedoch oftmals als zweckmäßig, insbesondere bei Verwendung von Coliganden wie den obengenannten phosphorenthaltenden Verbindungen, die jeweils gewünschte Ruthenium verbindung in einem geeigneten Lösungsmittel mit dem Coli-ganden zu vereinigen (s. o.), und die hierbei erhaltene Lösung oder Suspension, der Polymerisatdispersion zuzugeben. Gegebenenfalls wird diese Lösung bzw. Suspension, bevor sie zur Polymerisatdispersion gegeben wird, mit Wasserstoff oder einein anderen Reduktionsmittel, z. B. mit Wasserstoff bei Drücken im Bereich von 1 bis 20 bar und Temperaturen im Bereich von 50 bis 150 °C umgesetzt, wobei die katalytisch aktive Spezies gebildet wird. Die Aktivierung kann auch in situ, d. h. in der Polymerisatdispersion erfolgen.

Die Hydrierung erfolgt bei einem Partialdruck des Wasserstoffs im Bereich von 50 bis 600 bar, vorzugsweise 50 bis 400 bar, insbesondere 100 bis 300 bar. Die Reaktionstemperatur liegt im Bereich von 100 bis 250 °C, insbesondere 100 bis 180 °C. Je nach Art des Katalysatorsystems und dem gewünschten Umsatz werden Katalysatormengen im Bereich von 1 bis 1000 ppm Ruthenium, bezogen auf das Gesamtgewicht der zu hydrierenden Polymerisatdispersion, vorzugsweise 5 bis 500 ppm eingesetzt. Die Reaktionsdauer liegt in der Regel im Bereich von 1 bis 30 Stunden, vorzugsweise 2 bis 25 Stunden und insbesondere 3 bis 20 Stunden.

Die Reaktion kann je nach gewünschter Eigenschaft des hydrierten Polymers bis zu einem bestimmten Umsatz geführt werden, der in bekannter Weise durch Wahl der Reaktionsparameter wie Wasserstoffdruck und Temperatur sowie Art und Menge des eingesetzten Katalysatorsystems eingestellt werden kann. Eine Umsatzbestimmung kann beispielsweise IR-spektrometrisch durch Kontrolle der für ethylenisch ungesättigten Doppelbindungen typischen Banden im Bereich von 900 bis 1000 cm⁻¹ erfolgen.

Die nach den erfindungsgemäßen Verfahren hydrierten Polymerisatdispersionen zeichnen sich dadurch aus, dass die ethylenischen Doppelbindungen der in ihnen enthaltenen Polymerisaten P selektiv auch in Gegenwart anderer hydrieraktiver Doppelbindungen, beispielsweise aromatische C-C-Doppelbindungen, Carbonylgruppen, Nitrilfunktionen etc., hydriert worden sind.

Die so erhältlichen Polymerisatdispersionen, die nicht mehr als 20 Vol.-% eines organischen Lösungsmittels enthalten, sind neu und ebenfalls Gegenstand der vorliegenden Erfindung. Die aus ihnen erhältlichen Polymerisate, die in bekannter Weise aus den Dispersionen gewonnen werden (s. u.) und ebenfalls Gegenstand der vorliegenden Erfindung sind, zeichnen sich durch eine hohe, im Vergleich mit den nicht-hydrierten Grunddispersionen deutlich verbesserte Stabilität gegenüber Umwelteinflüssen wie Licht, Sauerstoff und/oder erhöhter Temperatur aus. Dies prädestiniert die erfindungsgemäßen Polymerisate für den Einsatz in Außenanwendungen, beispielsweise als Bindemittel für Dispersionsfarben und Beschichtungsmassen, als Ausrüstung für Textilien, Leder und Papier.

Eine besonders bevorzugte Ausführungsform der vorliegenden Erfindung betrifft die Hydrierung wässriger Dispersionen von Styrol-Butadien-Polymeren. Polymerisatdispersionen, die Butadien und Styrol in einpolymerisierter Form enthalten, werden vorzugsweise durch radikalische Emulsionspolymerisation hergestellt und sind wichtige großtechnische Produkte. Sie sind in vieler Hinsicht Polymerisaten auf der Basis Styrol/Butylacrylat vergleichbar, wobei das einpolymerisierte Butadien die Rolle des "weichmachenden" Butylacrylats übernimmt. Zwar besitzt Butadien gegenüber Butylacrylat einen beträchtlichen Kostenvorteil, da ersteres direkt aus dem C₄-Schnitt des Steamcrackers abgetrennt werden kann, wohingegen letzteres in wenigstens zwei Schritten ausgehend von Steamcrackerprodukten hergestellt werden muss, jedoch weisen andererseits butadienenthaltende Polymerisate die oben aufgeführten Nachteile hinsichtlich ihrer Witterungsbeständigkeit auf, so dass ihre Anwendungsmöglichkeiten bisher stark eingeschränkt waren.

Das erfindungsgemäße Hydrierverfahren führt bei den vorgenannten Polymeren auf der Basis von Butadien/Styrol überraschenderweise zu Polymeren P', die hinsichtlich ihrer mechanischem Eigenschaften den nicht hydrierten Polymerisaten wenigstens vergleichbar, wenn nicht gar überlegen sind und eine deutlich geringere Empfindlichkeit gegenüber Umweltbedingungen aufweisen. Die hydrierten Polymerisatdispersionen, die nicht mehr als 20 Vol.-% eines organischen Lösungsmittels enthaltend Polymere P' sind neu und ebenfalls Gegenstand der vorliegenden Erfindung. Die Polymere P' können in bekannter Weise durch Entfernung des Wassers und von gegebenenfalls vorhandenen Lösungsmitteln, z. B. durch Fällung und Filtration, durch Trocknung wie Sprüh- oder Gefriertrocknung oder in Verdampfungsextrudern, aus den wässrigen Dispersionen gewonnen werden.

Die erfindungsgemäß hydrierten Polymere P', die ausgehend von Polymerisaten P auf der Basis von Styrol und/oder α-Methylstyrol als Monomere (a) und Butadien und/oder Isopren als Monomere (b) erhältlich sind, sind im Wesentlichen aus Struktureinheiten I, II und III 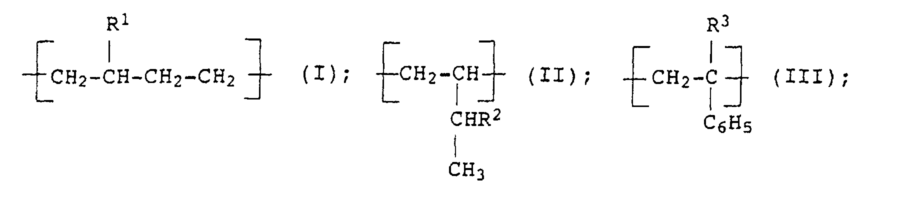 aufgebaut, worin R¹, R² und R³ unabhängig für Wasserstoff oder Methyl stehen.

Vorzugsweise stehen R¹ und R² für Wasserstoff. In der Regel weisen derartige Polymerisate P' 55 bis 98 mol-% Struktureinheiten I und II und 2 bis 45 mol-% Struktureinheiten III, jeweils bezogen auf die Gesamtmolzahl der Struktureinheiten I, II und III auf.

Ferner können derartige Polymere P' auch Struktureinheiten IV 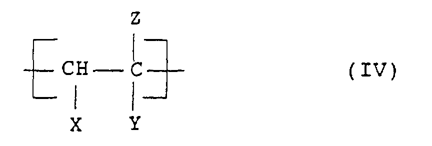 enthalten, worin X ausgewählt ist unter Wasserstoff, COOH und CH₂-COOH, Y ausgewählt ist unter COOH, CONH₂, CONH-CH₂OH und Z ausgewählt ist unter Wasserstoff, CH₃ und für X = H auch CH₂COOH bedeuten kann. Ferner können für Z = H oder Methyl X und Y auch für eine Gruppe -C(O)-O-C(O)- und C(O)-N(R)-C(O) stehen, worin R für Wasserstoff, C₁-C₆-Alkyl oder Aryl steht. Struktureinheiten IV resultieren aus den modifizierenden Monomeren (c) in den Polymerisaten P der Ausgangsdispersionen. Der molare Anteil der Struktureinheit IV liegt vorzugsweise im Bereich von 0,05 bis 10 mol-%, bezogen auf die Gesamtmolzahl der Struktureinheiten I, II und III.

Ferner können die Polymere P' Struktureinheiten V 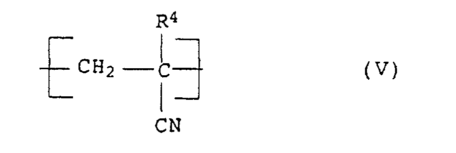 worin R⁴ für Wasserstoff oder Methyl und vorzugsweise für Wasserstoff steht, aufweisen. Struktureinheiten V resultieren aus einpolymerisiertem Acrylnitril bzw. Methacrylnitril in den Polymerisaten P der Ausgangsdispersionen. Der Anteil an Struktureinheiten V kann bis zu 40 mol-%, bezogen auf die Gesamtmolzahl der Struktureinheiten I, II und III, z. B. 0,5 bis 35 mol-%, betragen.

Die hydrierten Polymere P' zeichnen sich durch eine hohe Beständigkeit gegenüber Umwelteinflüssen, beispielsweise eine niedrige Vergilbungs- und Versprödungsneigung aus. Darüber hinaus zeichnen sich die Polymere P' durch eine gegenüber den nicht-hydrierten Polymerisate P verbesserte Reißfestigkeit und eine erhöhte Reißdehnung aus. Ein unerwünschter Molekulargewichtsaufbau durch Vernetzung im Verlaufe der Hydrierung wurde ebensowenig beobachtet wie die Hydrierung der Phenylgruppen in derartigen Polymerisaten.

Die Polymere P' bzw. ihre Dispersionen können beispielsweise als Bindemittel für Dichtungs- oder Beschichtungsmassen, beispielsweise in Dispersionsfarben, in Kunststoffputzen, speziell für Außenanwendungen, ferner als Haftkleber, als kautschukelastische Komponente in Formmassen eingesetzt werden.

### Beispiele

### I. Ausgangsdispersionen D1 und D2

Dispersion D1: Eine Monomeremulsion aus 28 kg Butadien, 9,2 kg Styrol und 8,0 kg wässrigem Kaliumoleat (17,4 gew-%-ig) in 45 kg Wasser wurde bei 10 °C mit 38,4 g Diisopropylbenzoylhydroperoxid und 37 g Dodecylmercaptan bis zu einem Umsatz von 80 % polymerisiert. Anschließend wurde der Restmonomergehalt durch kombinierte chemische und physikalische Desodorierung auf < 10 ppm Butadien und 400 ppm Styrol reduziert (bestimmt mittels Gaschromatographie des Serums).

Dispersion D2: In einem Polymerisationsgefäß wurden 5 kg Wasser und Saatlatex (Polystyrolsaat, 30 nm) vorgelegt und auf 75 °C erwärmt. Hierzu gab man 6 g Natriumpersulfat sowie 5 Gew.-% der Monomeremulsion. Anschließend gab man, zeitgleich beginnend unter Beibehaltung der Temperatur, über separate Zuläufe 2280 g einer 5 gew.-%igen, wässrigen Natriumpersulfatlösung und die verbliebene Menge der Monomeremulsion innerhalb 3 h zu, wobei der Druck 6 bar nicht überstieg. Anschließend polymerisierte man eine weitere Stunde unter Beibehaltung der Temperatur. Anschließend reduzierte man den Gehalt an Restmonomeren auf werte < 10 ppm durch kombinierte chemische und physikalische Desodorierung.

Die Monomeremulsion bestand aus

| | |
|---|---|
| 14250 g | eines Monomerengemischs aus Butadien und Styrol im Gewichtsverhältnis 1:2,1, |
| 750 g | Acrylsäure, |
| 105 g | Texapon®NSO (Henkel KGaA) und |
| 7400 g | Wasser. |

### II. Hydrierte Dispersionen (Beispiele 1 bis 6)

### a) Herstellung der Katalysatorlösung

In einem Autoklaven mit einem Volumen von 0,3 l legte man unter Argonatmosphäre 100 g Toluol, 5,0 g Ruthenium(III)tris-2,4-pentandionat und 10,15 g Tris-n-butylphosphin vor. Anschließend gab man bei Raumtemperatur 5 bar Wasserstoffdruck auf den Autoklaven, erwärmte auf 100 °C und erhöhte den Wasserstoffdruck auf 10 bar. Wasserstoffdruck und Temperatur behielt man 2 h bei, kühlte dann die Reaktionsmischung ab und überführte sie in ein inertes Vorratsgefäß.

### b) Erfindungsgemäßes Hydrierverfahren

### Beispiel 1:

Unter Inertgasbedingungen gab man 45,4 g der unter IIa hergestellten Katalysatorlösung unter intensiver Durchmischung zu 1 kg der Dispersion D1 aus I. Diese Mischung überführte man in einen Autoklaven mit einem Volumen von 2,5 l, der zuvor durch mehrfaches Evakuieren und Befüllen mit Stickstoff inertisiert war. Dann gab man bei Raumtemperatur 10 bar Wasserstoff auf den Autoklaven, erwärmte auf 110 °C und erhöhte dann den Wasserstoffdruck auf 50 bar. Wasserstoffdruck und Temperatur wurden 15 h beibehalten. Nach dem Abkühlen wurde die so erhaltene Dispersion analysiert. Die Ergebnisse sind in Tabelle 1 zusammengefasst.

### Beispiel 2:

Die Hydrierung erfolgte analog Beispiel 1, jedoch wurden auf 1 kg Dispersion D1 18,1 g Katalysatorlösung eingesetzt.

### Beispiel 3:

Die Hydrierung erfolgte analog Beispiel 2, jedoch betrug nunmehr die Reaktionstemperatur 150 °C und der Wasserstoffdruck 100 bar.

### Beispiel 4:

Die Hydrierung erfolgte analog Beispiel 3, jedoch in Gegenwart von 4,5 g Katalysatorlösung.

### Beispiel 5:

Unter Inertgasbedingungen gab man unter intensiver Durchmischung eine Mischung aus 0,09 g Katalysatorlösung aus IIa und 0,09 g Toluol zu einer Mischung aus 50 g der Dispersion D2 aus I und 50 g Wasser. Diese Mischung überführte man in einen inertisierten Autoklaven mit einem Fassungsvermögen von 300 ml. Anschließend gab man bei Raumtemperatur 10 bar Wasserstoff auf den Autoklaven, erwärmte auf 150 °C und erhöhte dann den Wasserstoffdruck auf 100 bar. Temperatur und Druck behielt man 15 h bei. Anschließend kühlte man auf Raumtemperatur ab und analysierte die Dispersion ohne weitere Behandlung. Die Ergebnisse sind in Tabelle 1 zusammengefasst.

### Beispiel 6:

Die Hydrierung erfolgte analog Beispiel 5. Der Katalysator wurde in Form einer Mischung aus 0,045 g Katalysatorlösung aus IIa und 0,135 g Toluol eingesetzt. Der Wasserstoffdruck lag während der Reaktion bei 280 bar. Die analytischen Werte der Dispersion sind in Tabelle 1 zusammengefasst.

**Tabelle 1**

| | Ru¹⁾ | T_{G}²⁾ | I/Iₒ³⁾ | |
|---|---|---|---|---|
| | [ppm] | [°C] | 960 cm⁻¹ | 910 cm⁻¹ |
| D1 | 0 | -55 | 1,00 | 1,00 |
| Beispiel 1* | 500 | -46 | 1,00 | 0,46 |
| Beispiel 2* | 200 | -47 | 0,95 | 0,05 |
| Beispiel 3* | 200 | n.b. | < 0,05 | < 0,05 |
| Beispiel 4* | 50 | -54 | < 0,85 | < 0,60 |
| D2 | 0 | 32 | 1,00 | 1,00 |
| Beispiel 5* | 10 | 32 | < 0,05 | < 0,05 |
| Beispiel 6* | 5 | 32 | 0,15 | < 0,05 |

| | | | | |
|---|---|---|---|---|
| * erfindungsgemäß | | | | |
| 1) Eingesetztes Ruthenium, bezogen auf die Gesamtmenge der eingesetzten Dispersion | | | | |
| 2) Bestimmt durch DSC (Differential-Kalorimetrie), ausgewertet durch "mid-point-Methode" nach ASTM D 3418-82 | | | | |
| 3) Verhältnis normierter Intensitäten von IR-Banden hydrierter Proben (I) und nicht hydrierter Proben (Iₒ). Die IR-Bande bei 960 cm⁻¹ resultiert aus der Doppelbindung einer 1,4-verknüpften Butadieneinheit und die Bande bei 910 cm⁻¹ aus der Doppelbindung einer 1,2-verknüpften Butadieneinheit. Die Intensitäten wurden durch Integration der jeweiligen Bande und Vergleich der so ermittelten Peakfläche gegen die Peakfläche der Bande bei 699 cm⁻¹ (Styroleinheit) normiert. | | | | |

### III. Bestimmung der anwendungstechnischen Eigenschaften

Die Dispersion D1 aus I und die Dispersion aus Beispiel 1 wurden in bekannter Weise zu filmen vergossen und getrocknet. Aus den getrockneten Filmen bereitete man Probenkörper mit einer Länge von 20 mm und einer Breite von 4 mm. Die Probendicke lag bei etwa 500 µm bis 600 µm.

Die so bereiteten Proben wurden einer Spannungs-/Dehnungsmessung nach DIN 53455-3 mit einer konventionellen Zugprüfmaschine unterworfen. Die Abzugsgeschwindigkeit lag bei 100 mm/min, die Probentemperatur bei 23 °C. Die Ergebnisse sind in Tabelle 2 zusammengefasst.

**Tabelle 2**

| | Ru¹⁾ | Reißfestigkeit²⁾ | Reißdehnung²⁾ |
|---|---|---|---|
| | [ppm] | [N/mm²] | [%] |
| Dispersion D1 | 0 | 1,14 | 315 |
| Beispiel 1³⁾ | 500 | 3,90 | 1646 |

| | | | |
|---|---|---|---|
| 1) siehe Tabelle 1 | | | |
| 2) bestimmt an Polymerfilmen gemäß DIN 53455 | | | |
| 3) erfindungsgemäß | | | |

## Patentansprüche

1. Verfahren zur selektiven Hydrierung von ethylenisch ungesättigten Doppelbindungen in Polymerisaten P durch Umsetzung der Polymerisate P mit Wasserstoff in Gegenwart wenigstens eines Hydrierkatalysators, ausgewählt unter Salzen und Komplexverbindungen des Rutheniums, **dadurch gekennzeichnet, dass** man die Umsetzung bei Temperaturen im Bereich von > 100 bis 250 °C und Wasserstoffpartialdrücken im Bereich von 50 bis 600 bar in einer wässrigen Dispersion der Polymerisate P durchführt, die nicht mehr als 20 Vol.-% eines organischen Lösungsmittels enthält.

2. Verfahren nach Anspruch 1, **dadurch gekennzeichnet, dass** der Hydrierkatalysator wenigstens ein Salz und/oder eine Komplexverbindung des Rutheniums und wenigstens eine phosphorenthaltende Verbindung, die eine koordinative Verbindung mit dem Ruthenium ausbilden kann, umfasst.

3. Verfahren nach Anspruch 2, **dadurch gekennzeichnet, dass** die phosphorenthaltende Verbindung ausgewählt ist unter Verbindungen der allgemeinen Formel PR₃ und R₂P-A-PR₂, worin die Reste R gleich oder verschieden sein können und unabhängig voneinander für Alkyl, Cycloalkyl, Aryl, Alkyloxy, Cycloalkyloxy und Aryloxy oder Fluor stehen können und A einen bivalenten Kohlenwasserstoffrest bedeutet.

4. Verfahren nach einem der vorhergehenden Ansprüche, **dadurch gekennzeichnet, dass** man 1 bis 1000 ppm Ruthenium, bezogen auf das Gesamtgewicht der Dispersion, einsetzt.

5. Verfahren nach einem der vorhergehenden Ansprüche, **dadurch gekennzeichnet, dass** die Dispersion Polymerisate P enthält, die im Wesentlichen aus wenigstens einem konjugiertem Dien als Monomer (a) und wenigstens einem mit dem Dien copolymerisierbaren Monomer (b) und gegebenenfalls einem modifizierenden Monomer (c) aufgebaut sind.

6. Verfahren nach Anspruch 5, **dadurch gekennzeichnet, dass** die Polymerisate P im Wesentlichen aufgebaut sind aus
20 bis 95 Gew.-% Monomeren (a), ausgewählt unter Butadien und Isopren, und
5 bis 80 Gew.-% Monomeren (b), ausgewählt unter Styrol und α-Methylstyrol und Acrylnitril,
wobei die Anteile der Monomere (a) und (b) sich zu 100 Gew.-% addieren.

7. Verfahren nach Anspruch 5 oder 6, **dadurch gekennzeichnet, dass** die Polymerisate P bis zu 20 Gew.-%, bezogen auf die Gesamtmenge der Monomere (a), (b) und (c), modifizierende Monomere (c) in einpolymerisierter Form enthalten.

8. Wässrige Polymerisatdispersionen, erhältlich nach einem Verfahren gemäß einem der vorhergehenden Ansprüche, enthaltend Polymere P', die im Wesentlichen aufgebaut sind aus Struktureinheiten I, II und III 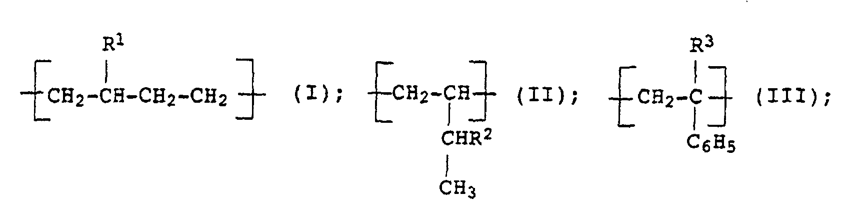 worin R¹, R² und R³ unabhängig voneinander für Wasserstoff oder Methyl stehen, enthaltend weniger als 20 Vol.-% eines organischen Lösungsmittels.

9. Wässrige Polymerisatdispersion gemäß Anspruch 8, worin die Polymere P' zusätzlich Struktureinheiten IV und/oder V 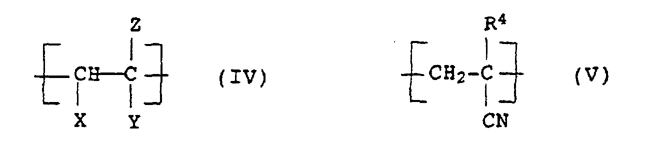 enthalten, worin
X ausgewählt ist unter Wasserstoff, COOH und CH₂-COOH,
Y ausgewählt ist unter COOH, CONH₂, CONHCH₂OH
Z ausgewählt ist unter Wasserstoff und CH₃ und für X = H auch CH₂COOOH bedeuten kann, oder
X und Y für -C(O)-O-C(O)- oder -C(O)-NR-C(O)- stehen, worin R für Wasserstoff, C₁-C₆-Alkyl oder Aryl steht, wenn Z = H oder Methyl ist und
R⁴ in Formel V Wasserstoff oder Methyl bedeutet.

## Claims

1. A process for selectively hydrogenating ethylenically unsaturated double bonds in polymers P by reacting the polymers with hydrogen in the presence of at least one hydrogenation catalyst selected from salts and complex compounds of ruthenium, which comprises conducting the hydrogenation at temperatures of from > 100 to 250°C and hydrogen partial pressures of from 50 to 600 bar in an aqueous dispersion of the polymers P that comprises not more than 20% by volume of an organic solvent.

2. A process as claimed in claim 1, wherein the hydrogenation catalyst comprises at least one salt and/or one complex compound of ruthenium and at least one phosphorus-containing compound which is able to form a co-ordinative bond with the ruthenium.

3. A process as claimed in claim 2, wherein the phosphorus-containing compound is selected from compounds of the formulae PR₃ and R₂P-A-PR₂, in which the radicals R can be identical or different and independently of one another can be alkyl, cycloalkyl, aryl, alkoxy, cycloalkoxy, aryloxy or fluorine and A is a bivalent hydrocarbon radical.

4. A process as claimed in any of the preceding claims, wherein from 1 to 1000 ppm ruthenium, based on the overall weight of the dispersion, are employed.

5. A process as claimed in any of the preceding claims, wherein the dispersion comprises polymers P which are built up essentially from at least one conjugated diene as monomer (a) and from at least one monomer, (b), which is copolymerizable with the diene, and, if desired, from a modifying monomer (C).

6. A process as claimed in claim 5, wherein the polymers P are composed essentially of
from 20 to 95% by weight of monomers (a) selected from butadiene and isoprene and
from 5 to 80% by weight of monomers (b) selected from styrene, α-methylstyrene and acrylonitrile,
the proportion of the monomers (a) and (b) adding up to 100% by weight.

7. A process as claimed in claim 5 or 6, wherein the polymers P contain up to 20% by weight, based on the overall amount of monomers (a), (b) and (c), of modifying monomers (c) in copolymerized form.

8. An aqueous polymer dispersion obtainable by a process as claimed in any of the preceding claims, comprising polymers P' which are composed essentially of structural units I, II and III 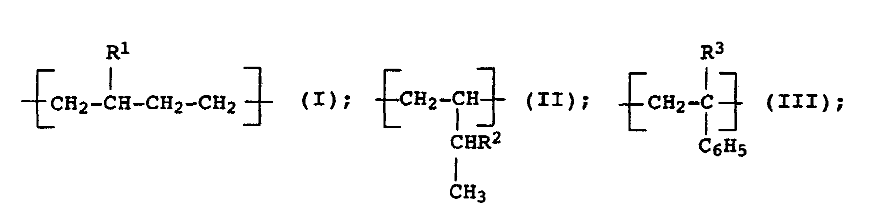 where R¹, R² and R³ independently are hydrogen or methyl comprising less than 20 vol.% of an organic solvent.

9. An aqueous polymer dispersion as claimed in claim 8 wherein the polymers P' additionally comprise structural units IV and/or V 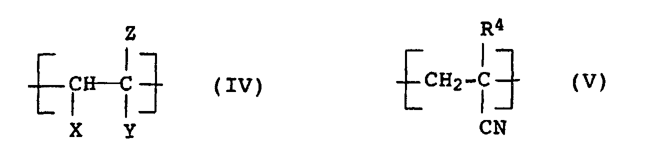 where
X is selected from hydrogen, COOH and CH₂-COOH,
Y is selected from COOH, CONH₂ and CONHCH₂OH,
Z is selected from hydrogen and CH₃ and, if X = H, can also be CH₂COOH, or
X and Y are -C(O)-O-C(O)- or -C(O)-NR-C(O)- in which R is hydrogen, C₁-C₆-alkyl or aryl, if Z = H or methyl, and
R⁴ in formula V is hydrogen or methyl.

## Revendications

1. Procédé d'hydrogénation sélective de doubles liaisons à insaturation éthylénique dans des polymères P par réaction des polymères P avec de l'hydrogène en présence d'au moins un catalyseur d'hydrogénation choisi parmi les sels et composés complexes du ruthénium, **caractérisé en ce qu'**on met en oeuvre la réaction à des températures comprises entre > 100 et 250°C et sous des pressions partielles d'hydrogène comprises dans la plage de 50 à 600 bar dans une dispersion aqueuse des polymères P qui ne contient pas plus de 20 % en volume d'un solvant organique.

2. Procédé selon la revendication 1, **caractérisé en ce que** le catalyseur d'hydrogénation comprend au moins un sel et/ou un composé complexe du ruthénium et au moins un composé contenant du phosphore, qui avec le ruthénium peut former un composé de coordination.

3. Procédé selon la revendication 2, **caractérisé en ce que** le composé contenant du phosphore est choisi parmi les composés de formule générale PR₃ et R₂P-A-PR₂, où les radicaux R peuvent être identiques ou différents et peuvent représenter chacun indépendamment de l'autre un groupe alkyle, cycloalkyle, aryle, alkyloxy, cycloalkyloxy et aryloxy, et A est un résidu hydrocarboné bivalent.

4. Procédé selon l'une des revendications précédentes, **caractérisé en ce qu'**on utilise de 1 à 1000 ppm de ruthénium par rapport au poids total de la dispersion.

5. Procédé selon l'une des revendications précédentes, **caractérisé en ce que** la dispersion contient des polymères P qui pour l'essentiel sont constitués d'au moins un diène conjugué en tant que monomère (a) et d'au moins un monomère (b) copolymérisable avec le diène et éventuellement d'un monomère modifiant (c).

6. Procédé selon la revendication 5, **caractérisé en ce que** les polymères P sont pour l'essentiel constitués
de 20 à 95 % en poids de monomères (a) choisis parmi le butadiène et l'isoprène, et
de 5 à 80 % en poids de monomères (b) choisis parmi le styrène et l'α-méthylstyrène et l'acrylonitrile,
la somme des pourcentages des monomères (a) et (b) faisant 100 % en poids.

7. Procédé selon la revendication 5 ou 6, **caractérisé en ce que** les polymères P contiennent jusqu'à 20 % en poids, par rapport à la quantité totale des monomères (a), (b) et (c), de monomères modifiants (c) sous forme polymérisées.

8. Dispersions aqueuses de polymères, pouvant être obtenues par un procédé selon l'une des revendications précédentes, contenant des polymères P' qui pour l'essentiel sont constitués de motifs structuraux I, II et III 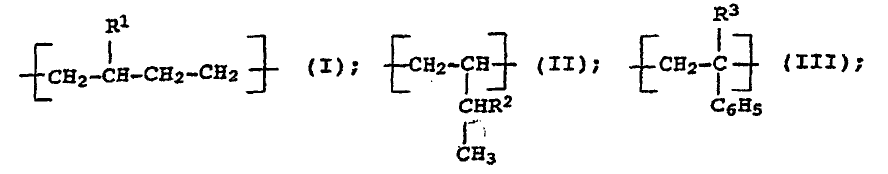 où R¹, R² et R³ représentent chacun indépendamment de l'autre un atome d'hydrogène ou le groupe méthyle, contenant moins de 20 % en volume d'un solvant organique.

9. Dispersion aqueuse de polymères selon la revendication 8, dans laquelle les polymères P' contiennent en outre des motifs structuraux IV et/ou V 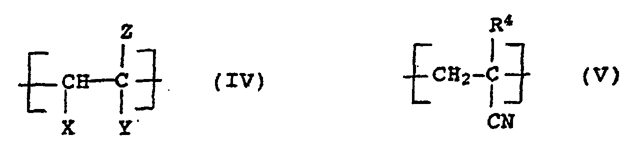 où
X est choisi parmi l'hydrogène, COOH et CH₂-COOH,
Y est choisi parmi COOH, CONH₂, CONHCH₂OH,
Z est choisi parmi l'hydrogène et CH₃ et, pour X = H, peut aussi représenter CH₂COOH, ou bien
X et Y représentent -C(O)-O-C-(O)- ou -C(O)-NR-C-(O)-, où R est un atome d'hydrogène, un groupe alkyle en C₁-C₆ ou un groupe aryle, quand Z est H ou un groupe méthyle, et
R⁴, dans la formule V, est un atome d'hydrogène ou le groupe méthyle.
